# EUROPEAN PATENT SPECIFICATION

(11) **EP 2 234 821 B1**
(45) Date of publication and mention of the grant of the patent: **27.04.2011**
(21) Application number: 08861548.9
(22) Date of filing: 15.12.2008
(51) Int. Cl.: B60C 11/12

(54) **SNOW TYRE TREAD**
WINTERREIFENPROFIL
BANDE DE ROULEMENT DE PNEU NEIGE

(30) Priority: 17.12.2007 FR 0708768; 25.02.2008 US 66921
(43) Date of publication of application: 06.10.2010
(73) Proprietor: Société de Technologie MICHELIN, 63000 Clermont-Ferrand (FR); MICHELIN Recherche et Technique S.A., 1763 Granges-Paccot (CH)
(72) Inventor: FUGIER, Sébastien, F-6300 Saint Bonnet Pres Riom (FR); GUICHON, Cyril, Greer, South Carolina 29650 (US)
(74) Representative: Randl, Oliver Georg
(86) International application number: PCT/EP2008/067543
(87) International publication number: WO 2009/077499

(56) References cited:
- EP-A- 0 847 878
- WO-A-01/60642
- DE-A1- 10 020 193
- JP-A- 8 197 915
- JP-A- 9 272 312
- JP-A- 10 264 613
- JP-A- 2002 316 517
- JP-A- 2003 159 911

## Description

### FIELD OF THE INVENTION

The present invention relates to tyre treads, particularly for tyres intended to be used on snowy surfaces. It also relates to tyres equipped with such treads.

### BACKGROUND

It is known practice for tread patterns to include notches (or incisions) of various sizes in order to remove the water that lies between the roadway and the tread, so as to re-establish the grip of the tyre on wet ground. A distinction is made between these notches on the basis of their width: there are channels (which are usually directed circumferentially and have a width typically ranging between 8 and 10 mm for passenger vehicle tyres), grooves (between 2 and 7 mm wide) and sipes (typically between 0.3 and 1 mm wide). These notches, and especially the sipes, are also very important in providing the tyre with grip on snowy surfaces.

Tread patterns intended to be used on snowy surfaces need to be able to tackle the difficulty of the snow tending to become packed in the notches and block them. If the snow fills the notches, then it is no longer the adhesion between rubber and snow which determines the way in which the tyre behaves but the snow-snow adhesion. Of course, the snow will have a tendency to fill the sipes and narrow grooves more quickly than the wide grooves and channels, because these wider grooves and channels have a larger snow storage capacity.

In the face of this difficulty, proposals have been made to provide the narrow incisions with widened regions so as to improve the ability of these incisions to store snow. Because the term "incision" is often used to denote relatively narrow notches, we shall be using the more general term "cutout". This term "cutout" is to be understood to mean a hollow space in a tread delimited by walls, facing one another, of rubber compound or of any other material of which the tread is made and which opens onto the running surface thereby forming two opposing edges.

Document EP 0 847 878 seeks to improve the traction of a tyre on snowy ground. It describes a tyre tread comprising a cutout opening onto the running surface and having a depth less than the thickness of the tread, this cutout forming, on the running surface of the tyre, when new, two opposing edges, these edges delimiting a plurality of narrow portions and at least one wide portion, these wide and narrow portions being positioned such that they alternate, and both extend over the entire depth of the cutout. The wide portions have a width that decreases gradually towards the inside of the tread. In particular, document EP 0 847 878 discloses the features of the preamble of claim 1.

Document EP 1 190 871 addresses another problem, namely the fact that narrow incisions tend to close up when the tyre is under acceleration or under breaking. That document teaches to reduce the width at some locations along the incisions. It discloses a tread comprising at least one cutout opening onto the running surface and having a depth less than the thickness of the tread, this cutout forming, on the running surface of the tyre, two opposing edges, these edges delimiting a plurality of narrow portions and a plurality of wide portions, these wide and narrow portions being positioned such that they alternate, the narrow portion extending over the entire depth of the cutout. The wide portions extend down to the depth of the cutout.

The walls of the cut-outs thus formed do not fully close up when the tyre is under acceleration, because the wider portions remain open and can continue to store snow.

The tread patterns proposed in the cited prior art have a number of disadvantages. In particular, the structure of the bottom of the cutout involves the risk of causing cracks to appear and of thus compromising the endurance of the tyre.

### SUMMARY OF THE INVENTION

One object of the present invention is to provide a tread for tyres which are intended to be used under winter conditions and which gives the tyre good grip on snow while at the same time having good endurance.

This object is achieved by the features of claim 1 One embodiment of the present invention is directed to a tyre tread of thickness E, comprising:
a running surface intended to come into contact with the ground;
at least one cutout opening onto the running surface and having a depth P less than the thickness E of the tread. Of course, the tread may have other notches.

The cutout forms, on the running surface of the tyre, when new, two opposing edges, these edges delimiting at least one narrow portion of the cutout, that is to say a portion the mean width LE of which is less than or equal to 1 mm, and at least one wide portion of the cutout, that is to say a portion the mean width LL of which is greater than 1 mm.

These wide and narrow portions are positioned such that they alternate. The narrow portion extends over the entire depth P of the cutout, the wide portion extending into the depth of the tread over at least 30% of the depth of the cutout.

In a tread according to an embodiment of the invention, the wide portion extends into the depth as far as a depth F which is less than the depth P of the cutout. Thus, the bottom of the cutout has a particularly simple geometry. It has only narrow portions and has no region of transition between narrow portions and wide portions, thus reducing the risk of cracks appearing, thereby increasing the endurance of the tyre equipped with the tread.

According to one preferred embodiment, each wide portion is extended to a depth greater than the depth F by an extension part the mean width of which is less than or equal to 1 mm. The wide portion is thus extended by a part of a width substantially identical to that of the narrow portion, thus further reducing the risks of cracks appearing in the region of transition between the narrow portions and the wide portions at the depth F.

More preferably still, the extension part extends down to the depth P. Thus, the bottom of the cutout is formed by one and only one narrow portion, this being the best way to prevent cracks from forming at the bottom of the cutout.

It is possible to provide an abrupt transition between the wide portion and the extension part. However, it is preferable for the wide portion to comprise a connecting part intended to connect to the extension part, the width of the wide portion decreasing, in this connecting part, continuously and gradually down to the width of the extension part, because the presence of abrupt transitions may give rise to regions where cracks can initiate. Furthermore, a continuous and gradual transition such as this between the wide portion and the extension part in the depth of the cutout guarantees the continuity of the performance of the tread when tyre wear reaches the transition region.

As a preference, the mean width LE of the narrow portion is greater than 0.2 mm and less than 0.8 mm, because a narrower or wider narrow portion would hardly have the effect of a sipe increasing grip on snowy surfaces.

According to one advantageous embodiment, the difference D between the depth P of the cutout and the depth F of the wide portion is greater than or equal to 1 mm. Specifically, when the distance D is reduced to values below 1 mm, the bottom of the cutout is not sufficiently far away from regions where cracks may initiate.

Advantageously, the mean width LL of the wide portion is less than or equal to 2.5 mm; a greater width impairs the rigidity of the surrounding region of the tread and may also cause uneven wear.

According to one advantageous embodiment, for at least one cutout on the running surface in the unworn condition, the ratio R between:
(a) the sum of the lengths of the wide portions of the cutout and
(b) the sum of the lengths of the narrow portions of the cutout
is greater than or equal to 0.2 and less than or equal to 5. More preferably still, the ratio R ranges between 0.8 and 1.5 inclusive. At these values, a particularly advantageous compromise is reached between the way in which the cutout acts like a sipe and its ability to "dig into" the snow.

According to an advantageous embodiment, the mean width LL of the wide portion is constant over at least 30%, and preferably 50%, of the depth P of the cutout, measured from the running surface. Thus, the volume available is enlarged by comparison with an evolution of the width of the wide portion as taught in document EP 0 847 878.

According to another advantageous embodiment, all the narrow portions of the cutout have substantially the same length LoE and all the wide portions of the cutout have substantially the same length LoL. These lengths are measured in the direction of the greatest dimension of the cutout on the running surface. This embodiment allows the tread to be very uniform.

The invention also relates to a tyre comprising a tread according to the invention.

### BRIEF DESCRIPTION OF THE DRAWINGS

Figure 1 schematically depicts a perspective view of a tread block of a tread according to an embodiment of the invention;

Figure 2 schematically depicts another perspective view of the tread block of Figure 1;

Figures 3 and 4 illustrate how the widths and lengths that characterize a cutout according to an embodiment of the invention are measured;

Figures 5 to 7 schematically depict various ways of making the transition in width for a wide portion, in the depth of a cutout;

Figures 8 to 12 depict various alternative patterns of a cutout according to embodiments of the invention on the running surface, in the unworn condition.

### DETAILED DESCRIPTION OF THE DRAWINGS

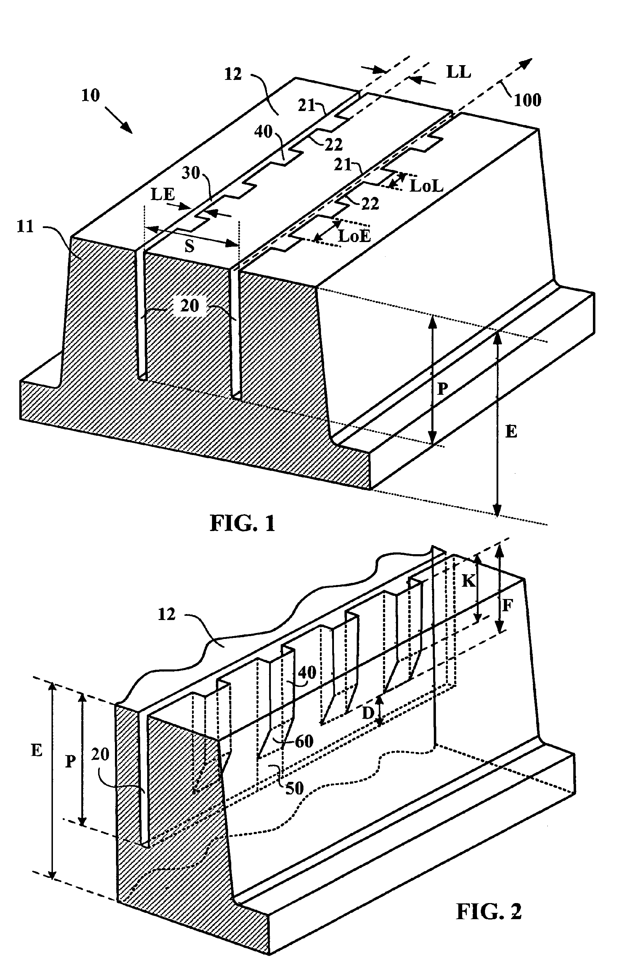

Figure 1 schematically depicts a perspective view of a tread block 11 of a tread 10 according to an embodiment of the invention. The tread 10 has a thickness E and comprises a running surface 12 intended to come into contact with the ground. A "running surface" here is to be understood to mean all the points on the surface of the tread which are intended to come into contact with the ground. Figure 1 shows just part of the running surface, namely that part which is located on the block 11. The block 11 also comprises two cut-outs 20 opening onto the running surface 12 and of a depth P which is less than the thickness E of the tread. A "cutout" must be understood here to mean a hollow space in a tread delimited by walls, facing one another, of rubber compound or of any other material of which the tread is made and opening onto the running surface thereby forming two opposing edges.

The cut-outs 20 are positioned a distance S of 4.5 mm apart. Each one, on the running surface of the tyre, when new, forms two opposing edges 21 and 22, these edges delimiting a plurality of narrow portions 30 of the cutout, that is to say of portions the average width LE of which is less than or equal to 1 mm. Each cutout 20 also comprises a plurality of wide portions 40, that is to say of portions of an average width LL greater than 1 mm. In this instance, the width of the wide portions is constant. The wide portions 40 and the narrow portions 30 are arranged such that they alternate.

As can be seen in Figure 2 which depicts a detail of the tread 10 of Figure 1, the narrow portions 30 extend over the entire depth P of the cutout, while the wide portions 40 extend into the depth of the tread over 60% of the depth P of the cutout 20. The wide portions 40 extend into the depth as far as a depth F which is less than the depth P of the cutout.

In this particular instance, the wide portions are extended as far as the depth P by an extension part 50 the average width of which is less than or equal to 1 mm, preferably the same as the average width LE of the narrow portions 30.

The difference D between the depth P of the cutout and the depth F of the wide portion is equal to 3 mm. This distance ensures that the change in width of the cutout between the wide portions 40 and the portions 30 does not give rise to regions where cracks can initiate near the bottom of the cutout 20. The endurance of the tread 10 (and, as a result, of the tyre equipped with this tread) is thereby improved.

It will be noted that the average width LL of the wide portion 40 is constant over 50% of the depth P of the cutout 20 (down to the depth K) measured from the running surface 12. Thus, the cutout 20 has a good ability to store snow.

The wide portions 40 comprise a connecting part 60 intended to connect the wide portion 40 to the extension part 50. The width of the wide portion 40 decreases, in this convection part, continuously and gradually down to the width of the extending part 50.

In this particular instance, all the narrow portions 30 of the cutout 20 have the same length LoE and all the wide portions 40 of the cutout 20 have the same length LoL. As was already stated above, these lengths are measured in the direction of the greatest dimension 100 (see Figure 1) of the cutout 20 on the running surface 12. This preferred embodiment keeps the tread very uniform.

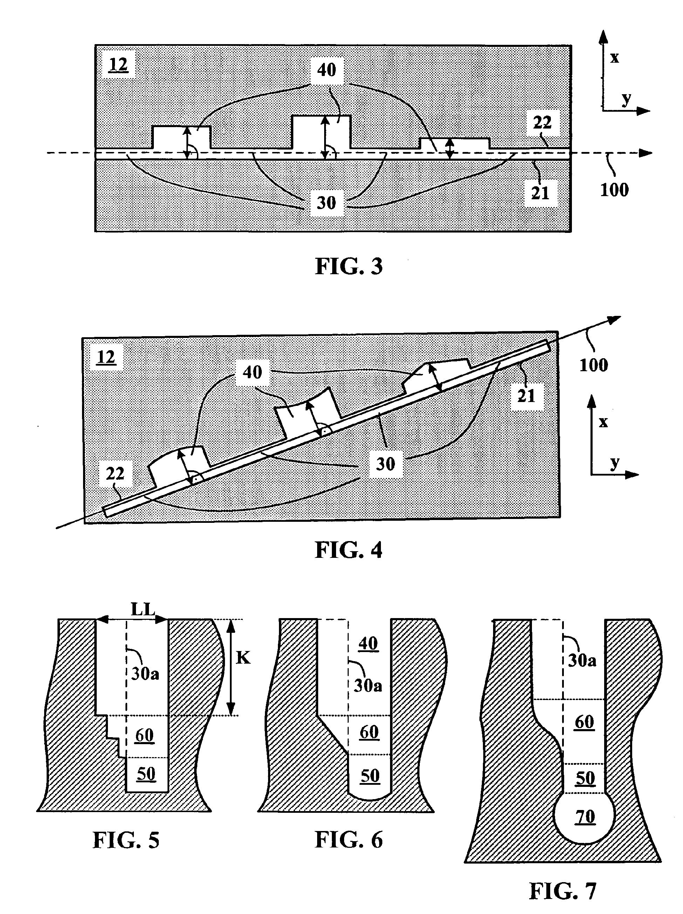

Figures 3 and 4 schematically depict part of the running surface 12 of a tread. The direction x denotes the direction of the greatest dimension of the tread (only part of which has been depicted). When the tread is fixed to a tyre, x corresponds to the circumferential direction. The direction y is perpendicular both to the direction x and to the direction of the thickness of the tread. When the tread is fixed to a tyre, y corresponds to the axial direction.

The widths of the wide portions 40 and narrow portions 30 are measured at right angles to one of the edges 21 or 22. If, as may be the case with complex geometries, the mean width of a portion, measured at right angles to the first edge is not identical to the mean width of the portion measured at right angles to the second edge, then the mean width is considered to be the mean of the two values obtained at right angles to the two edges.

Figure 4 also illustrates the fact that a portion of cutout, whether it be wide or narrow, does not necessarily have a constant width. In this particular instance, the three wide portions 40 each have a width which varies along the mean trace 100 of the cutout.

Figures 5 to 7 schematically depict various ways of making the transition in terms of width between a wide portion 40, of mean width LL at the running surface, and an extension part 50, in the depth of a cutout. The profile of the adjacent narrow portion 30 is indicated by a dashed line 30a.

It is quite obviously possible to provide an abrupt transition by ending the wide portion abruptly at the depth K. Figure 5 shows a variant in which the reduction occurs in three stages, in the connecting part 60. The disadvantage of this variant is that it creates several sharp corners and, as a result, regions where cracks can initiate. This risk is greatly reduced in the variant depicted in Figure 6 in which the width of the wide portion 40 decreases continuously and gradually in the connecting part 60. A continuous and gradual transition such as this between the wide and narrow portions in the depth of the cutout also ensures the continuity of performance of the tread when the tyre wear reaches the transition region. In the variant depicted in Figure 7, all the corners are rounded, which gives excellent results. By contrast, the moulding elements are slightly more tricky and expensive to manufacture.

It will also be noted that the cutout in Figure 7 opens into a cavity 70 with rounded geometry, thus minimizing any risk of cracks appearing.

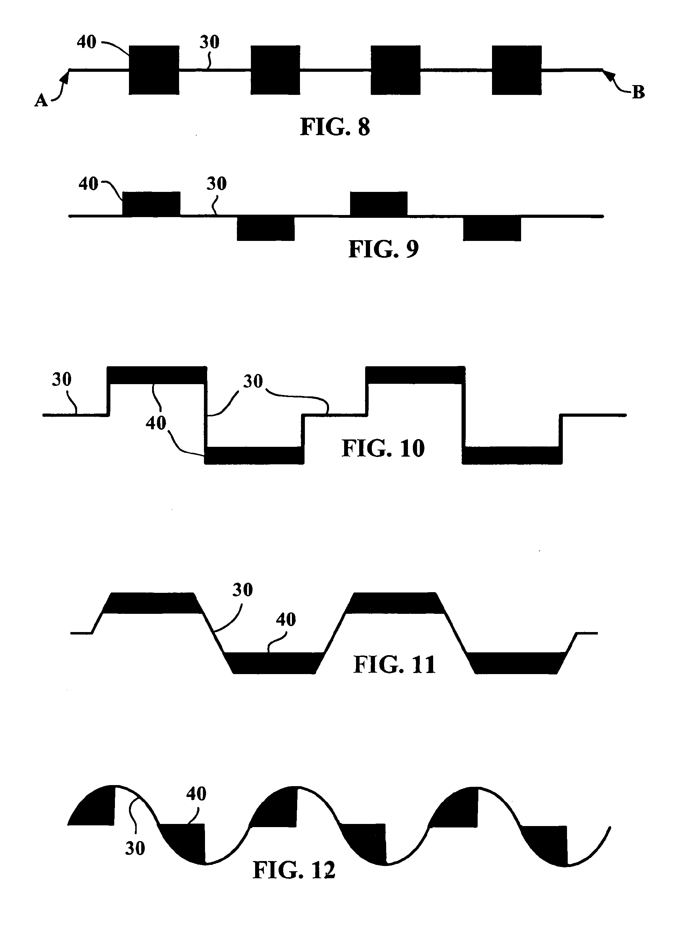

Figures 8 to 12 depict several variants of the trace of a cutout according to the invention on the running surface in the unworn condition. To characterize the geometry of the cutout, a ratio R between the sum of the lengths of the wide portions of the cutout and the sum of the lengths of the narrow portions of the cutout is defined.

Figure 8 schematically depicts the pattern of a cutout all the narrow portions 30 of which have a constant width of 0.6 mm and all the wide portions of which have a constant width of 3 mm. Unlike the cut-outs depicted in the preceding figures, the wide portions widen the narrow portions symmetrically with respect to a "mid plane" which contains both the direction of the greatest dimension of the cutout and the direction of the thickness and which lies mid-way between the edges. The ratio R is 0.66. The cutout extends between a starting point A and an end point B. It should be pointed out that it is not essential for the cutout to begin and end in a narrow part; it is perfectly possible to provide a cutout which begins and/or ends in a wide portion (see, for example, Figure 12).

The variant in Figure 9 differs from the variant depicted in Figure 8 in that the symmetry is broken. The successive wide portions 40 lie alternately one on each side of the mid-plane defined above. Their width is constant (at 2 mm) as is that of the narrow portions 30 (0.5 mm). The ratio R is slightly greater than 1.

Figure 10 shows a variant in which the narrow portions 30 have a constant width of 0.4 mm, the wide portions 40 have a constant width of 1.5 mm and the ratio R is 3.

Figure 11 depicts another cutout in which the narrow portions 30 are not aligned in the direction of the longest dimension of the cutout. Here, the ratio R is as high as 5.

Finally, Figure 12 depicts a cutout in which the width of the wide portions 4.0 varies over the running surface. The ratio R is 1.

## Claims

1. Tire tread (10) of thickness E, comprising:
a running surface (12) intended to come into contact with the ground; and
at least one cutout (20) opening onto the running surface and having a depth P which is less than thickness E of the tread, this cutout forming, on the running surface of the tyre, when new, two opposing edges, these edges delimiting at least one narrow portion (30) of the cutout and at least one wide portion (40) of the cutout, these wide and narrow portions being positioned such that they alternate,
wherein the narrow portion has a mean width LE which is less than or equal to 1 mm,
wherein the wide portion has a mean width LL which is greater than 1 mm,
wherein the narrow portion extends over the entire depth P of the cutout, and
wherein the wide portion extends into the depth of the tread over at least 30% of the depth P of the cutout, **characterised in that**
the wide portion extends into the depth as far as a depth F which is less than the depth P of the cutout.

2. Tread according to Claim 1, in which each said wide portion (40) is extended to a depth greater than the depth F by an extension part (50) the mean width of which is less than or equal to 1 mm.

3. Tread according to Claim 2, in which the extension part (50) extends down to the depth P.

4. Tread according to any of Claims 2 or 3, in which the wide portion (40) comprises a connecting part (60) intended to connect the wide portion to the extension part (50), the width of the wide portion decreasing, in this connecting part, continuously and gradually down to the width of the extension part.

5. Tread according to any of Claims 1 to 4, in which the mean width LE of the narrow portion (30) is greater than 0.2 mm and less than 0.8 mm.

6. Tread according to any of Claims 1 to 5, in which the difference D between the depth P of the cutout (20) and the depth F of the wide portion (40) is greater than or equal to 1 mm.

7. Tread according to any of Claims 1 to 6, in which the mean width LL of the wide portion (40) is less than or equal to 2.5 mm.

8. Tread according to any of Claims 1 to 7, in which, for at least one cutout (20), over the running surface (12) in the unworn condition, the ratio R between:
(a) the sum of the lengths of the wide portions (40) of the cutout, and
(b) the sum of the lengths of the narrow portions (30) of the cutout,
is greater than or equal to 0.2 and less than or equal to 5.

9. Tread according to Claim 8, in which the ratio R is greater than or equal to 0.8 and less than or equal to 1.5.

10. Tread according to any of Claims 1 to 9, in which the mean width LL of the wide portion (40) is constant over at least 30% of the depth P of the cutout (20), measured from the running surface (12).

11. Tread according to any of Claims 1 to 10, in which all the narrow portions (30) of the cutout (20) have substantially the same length LoE and all the wide portions (40) of the cutout (20) have substantially the same length LoL.

12. Tire comprising a tread according to any of Claims 1 to 11.

## Patentansprüche

1. Reifenprofil (10) mit einer Dicke E, umfassend:
eine Lauffläche (12), die mit dem Boden in Kontakt kommen soll; und
mindestens einen Ausschnitt (20), der in der Lauffläche mündet und eine Tiefe P aufweist, die geringer ist als die Dicke E des Profils, wobei dieser Ausschnitt auf der Lauffläche des Reifens im Neuzustand zwei einander gegenüberliegende Ränder bildet, wobei diese Ränder mindestens einen schmalen Teil (30) des Ausschnitts und mindestens einen breiten Teil (40) des Ausschnitts definieren, wobei diese breiten und schmalen Teile so positioniert sind, dass sie sich abwechseln,
wobei der schmale Teil eine mittlere Breite LE aufweist, die kleiner gleich 1 mm ist,
wobei der breite Teil eine mittlere Breite LL aufweist, die größer als 1 mm ist,
wobei sich der schmale Teil über die gesamte Tiefe P des Ausschnitts erstreckt, und
wobei sich der breite Teil über mindestens 30% der Tiefe P des Ausschnitts in die Tiefe des Profils erstreckt, **dadurch gekennzeichnet, dass** sich der breite Teil so weit wie eine Tiefe F, die geringer ist als die Tiefe P des Ausschnitts, in die Tiefe erstreckt.

2. Profil nach Anspruch 1, wobei sich jeder breite Teil (40) bis zu einer Tiefe erstreckt, die um einen Verlängerungsteil (50), dessen mittlere Breite kleiner gleich 1 mm ist, größer ist als die Tiefe F.

3. Profil nach Anspruch 2, wobei sich der Verlängerungsteil (50) bis zu der Tiefe P erstreckt.

4. Profil nach Anspruch 2 oder 3, wobei der breite Teil (40) einen Verbindungsteil (60) umfasst, der den breiten Teil mit dem Verlängerungsteil (50) verbinden soll, wobei die Breite des breiten Teils in diesem Verbindungsteil kontinuierlich und allmählich bis zu der Breite des Verlängerungsteils abnimmt.

5. Profil nach einem der Ansprüche 1 bis 4, wobei die mittlere Breite LE des schmalen Teils (30) größer als 0,2 mm und kleiner als 0,8 mm ist.

6. Profil nach einem der Ansprüche 1 bis 5, wobei die Differenz D zwischen der Tiefe P des Ausschnitts (20) und der Tiefe F des breiten Teils (40) größer gleich 1 mm ist.

7. Profil nach einem der Ansprüche 1 bis 6, wobei die mittlere Breite LL des breiten Teils (40) kleiner gleich 2,5 mm ist.

8. Profil nach einem der Ansprüche 1 bis 7, wobei für mindestens einen Ausschnitt (20) über die Lauffläche (12) im nicht verschlissenen Zustand das Verhältnis R zwischen:
(a) der Summe der Längen der breiten Teile (40) des Ausschnitts und
(b) die Summe der Längen der schmalen Teile (30) des Ausschnitts
größer gleich 0,2 und kleiner gleich 5 ist.

9. Profil nach Anspruch 8, wobei das Verhältnis R größer gleich 0,8 und kleiner gleich 1,5 ist.

10. Profil nach einem der Ansprüche 1 bis 9, wobei die mittlere Breite LL des breiten Teils (40) über mindestens 30% der Tiefe P des Ausschnitts (20), gemessen von der Lauffläche (12), konstant ist.

11. Profil nach einem der Ansprüche 1 bis 10, bei dem alle schmalen Teile (30) des Ausschnitts (20) im Wesentlichen die gleiche Länge LoE und alle breiten Teile (40) des Ausschnitts (20) im Wesentlichen die gleiche Länge LoL aufweisen.

12. Reifen mit einem Profil nach einem der Ansprüche 1 bis 11.

## Revendications

1. Bande de roulement (10) pour pneumatique, d'épaisseur E, comportant :
- une surface de roulement (12) destinée à entrer en contact avec le sol ;
- au moins une découpure (20) débouchant sur la surface de roulement et ayant une profondeur P inférieure à l'épaisseur E de la bande de roulement, cette découpure formant, sur la surface de roulement du pneumatique à l'état neuf, deux arêtes en vis-à-vis, ces arêtes délimitant au moins une portion étroite (30) de la découpure et au moins une portion large (40) de la découpure ces portions large et étroite étant disposées en alternance,
dans laquelle la portion étroite a une largeur moyenne LE inférieure ou égale à 1 mm,
dans laquelle la portion large a une largeur moyenne LL supérieure à 1 mm, dans laquelle la portion étroite (30) s'étend sur toute la profondeur P de la découpure,
dans laquelle la portion large (40) s'étend dans la profondeur de la bande de roulement sur au moins 30 % de la profondeur de la découpure,
**caractérisée en ce que** la portion large s'étend dans la profondeur jusqu'à une profondeur F qui est inférieure à la profondeur P de la découpure.

2. Bande de roulement selon la revendication 1, dans laquelle chaque portion large (40) est prolongée jusqu'à une profondeur supérieure à la profondeur F par une partie de prolongement (50) ayant une largeur moyenne inférieure ou égale à 1 mm.

3. Bande de roulement selon la revendication 2, dans laquelle la partie de prolongement (50) s'étend jusqu'à la profondeur P.

4. Bande de roulement selon la revendication 2 ou 3, dans laquelle la portion large (40) comporte une partie de raccordement (60) destinée à raccorder la portion large à la partie de prolongement (50), la largeur de la portion large diminuant, dans cette partie de raccordement, de façon continue et progressive pour atteindre la largeur de la partie de prolongement.

5. Bande de roulement selon l'une des revendications 1 à 4, dans laquelle la largeur moyenne LE de la portion étroite (30) est supérieure à 0.2 mm et inférieure à 0.8 mm.

6. Bande de roulement selon l'une des revendications 1 à 5, dans laquelle la différence D entre la profondeur P de la découpure (20) et la profondeur F de la portion large (40) est supérieure ou égale à 1 mm.

7. Bande de roulement selon l'une des revendications 1 à 6, dans laquelle la largeur moyenne LL de la portion large (40) est inférieure ou égale à 2.5 mm.

8. Bande de roulement selon l'une des revendications 1 à 7, dans laquelle, pour au moins une découpure (20), sur la surface de roulement à l'état non usé, le ratio R entre :
- la somme des longueurs des portions larges (40) de la découpure et
- la somme des longueurs des portions étroites (30) de la découpure,
est supérieur ou égal à 0.2 et inférieur ou égal à 5.

9. Bande de roulement selon la revendication 8, dans laquelle le ratio R est supérieur ou égal à 0.8 et inférieur ou égal à 1.5.

10. Bande de roulement selon l'une des revendications 1 à 9, dans laquelle la largeur moyenne LL de la portion large (40) est constante sur au moins 30 % de la profondeur P de la découpure (20), en partant de la surface de roulement (12).

11. Bande de roulement selon l'une des revendications 1 à 10, dans laquelle toutes les portions étroites (30) de la découpure ont sensiblement la même longueur LoE et toutes les portions larges (40) de la découpure (20) ont sensiblement la même longueur LoL.

12. Pneumatique comportant une bande de roulement selon l'une quelconque des revendications 1 à 11.
